# EUROPEAN PATENT APPLICATION

(11) **EP 1 929 991 A1**
(43) Date of publication of application: **11.06.2008**
(21) Application number: 06810558.4
(22) Date of filing: 26.09.2006
(51) Int. Cl.: A61J 3/00, B65G 47/78

(54) **APPARATUS FOR RELEASING DRUGS**

(30) Priority: 30.09.2005 JP 2005288737; 27.03.2006 JP 2006086139
(71) Applicant: Yuyama Mfg. Co., Ltd., Toyonaka-shi, Osaka 561-0841 (JP)
(72) Inventor: YUYAMA, Shoji, Toyonaka-shi Osaka 561-0841 (JP); SHIGEYAMA, Yasuhiro, Toyonaka-shi Osaka 561-0841 (JP); KANDA, Hiroyuki, Toyonaka-shi Osaka 561-0841 (JP)
(74) Representative: HOFFMANN EITLE
(86) International application number: PCT/JP2006/319033
(87) International publication number: WO 2007/040092

(57) **Abstract**

[PROBLEMS] By allowing to reserve medicines in various patterns according to needs, a large amount of medicines are dispensed at once.

[MEANS FOR SOLVING PROBLEMS] A medicine dispenser of the present invention includes a plurality of medicine storage portions (25), in which medicines (10) are stored by type, and a medicine recovery portion (26), which moves to the medicine storage portions (25) having target medicines (10) based on prescription data, retains and transfers the medicines (10) dispensed from the medicine storage portions (25) and then feeds the medicines (10) at a predetermined position. The medicine recovery portion (26) includes a plurality of medicine reservoir chambers (31), and the medicines (10) dispensed from the medicine storage portions (25) can be retained in each of the medicine reservoir chambers (31) in arbitrary storage patterns.

## Description

### Technical Field

The present invention relates to a medicine dispenser, and more particularly, to a medicine dispenser capable of dispensing a large amount of medicines contained in ampoules, vials (including glass and polymeric bottles or containers having a closure or lid), or the like at once.

### Background Art

Conventionally, for a medicine dispenser, there is employed a structure in which a collecting lifter is moved to a cassette which stores ampoules, and the ampoules, which are dispensed by driving a pusher device to rotate a rotor of the cassette, are retained and transferred (see, for example, Patent Document 1).

Patent Document 1: PCT Pamphlet, WO 2004/034955

### Disclosure of the Invention

### Problem to be solved by the Invention

However, in the related-art medicine dispenser, the number of the ampoules which can be dispensed at once is limited. Normally, the dispensing of the ampoules is collectively performed for each dose period, and when the collecting lifter is used, it is possible to only dispense the ampoules for one dose period at once.

It is therefore an object of the present invention to provide a medicine dispenser capable of dispensing a large amount of medicines at once by allowing to reserve medicines in various patterns according to needs.

### Means for solving the Problem

As means for achieving the above-mentioned object, the present invention relates to a medicine dispenser including: a plurality of medicine storage portions in which medicines are stored by type; and a medicine recovery portion which moves to the medicine storage portions having target medicines based on prescription data, retains and transfers the medicines dispensed from the medicine storage portions, and recovers the medicines at a predetermined position, in which: the medicine recovery portion includes a plurality of medicine reservoir chambers; and the medicines dispensed from the medicine storage portions can be retained in the medicine reservoir chambers in arbitrary storage patterns.

With this structure, in the plurality of medicine reservoir chambers, the medicines can be retained in the arbitrary storage patterns. Accordingly, even when the medicines are retained in the one medicine reservoir chamber, without dispensing the medicines, the next medicines are retained in the next medicine reservoir chamber, and a large amount of medicines can be dispensed at once.

It is preferable that the storage patterns of the medicines which can be retained in each of the medicine-storage chambers be determined based on each of dose periods of the prescription data for a certain patient.

With this structure, when there is an input of the prescription data for the certain patient, the target medicines can be automatically retained in each of the medicine reservoir chambers for each dose period. The retained medicines can be fed at once, so the medicines prescribed for the patient can be quickly prepared.

It is appropriate that the medicine recovery portion include a medicine storage member, which has a cylindrical shape whose outer peripheral surface is formed with an put-in port and a discharge port, a partition member for dividing an inside of the medicine storage member into a plurality of medicine reservoir chambers, and an open and close member for opening and closing the discharge port, the medicine recovery portion allowing the medicines to be put into each of the medicine reservoir chambers through the put-in port, allowing the partition member to rotate, and allowing the discharge port to be opened by the open and close member, to thereby feed the medicines retained in each of the medicine reservoir chambers.

With this structure, by a simple structure in which the partition member is rotated, a large amount of medicines can be retained in desirable storage patterns. The medicine recovery portion is moved to the predetermined position, the partition member is rotated, and the discharge port is opened and closed by the opening member, thereby making it possible to successively feed the medicines from the target medicine reservoir chamber.

### Effects of the Invention

According to the present invention, the medicines dispensed by the medicine storage portions can be retained in each of the medicine reservoir chambers in the arbitrary storage patterns, so the large amount of medicines can be transferred to be fed at once. Further, the medicines can be divided and retained in each of the medicine reservoir chamber in the desirable storage patterns, so the medicines retained according to the storage patterns can be fed at the predetermined position.

### Best Mode for carrying out the Invention

In the following, an embodiment according to the present invention will be described with reference to the attached drawings.

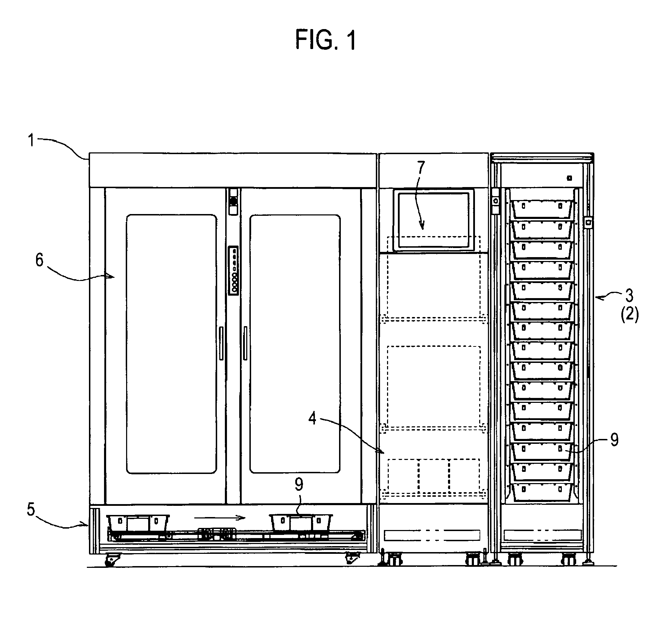

Fig. 1 shows an ampoule dispenser according to this embodiment. The ampoule dispenser has a structure in which a device main body 1 having a substantially rectangular parallelepiped frame shape covered by a panel is provided with (i) a tray feed portion 2, (ii) a tray recovery portion 3, (iii) a label feed portion 4, (iv) a tray transfer portion 5, (v) an ampoule feed portion 6, (vi) an injection prescription feed portion 7, and (vii) a control portion 8.

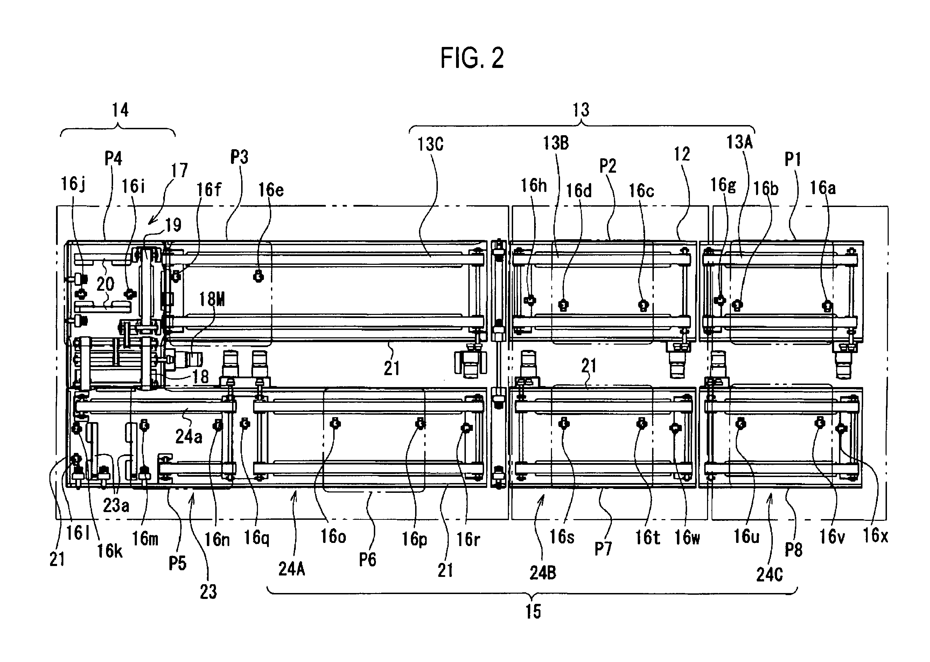

(Structure of each portion)
(i) Tray feed portion: The tray feed portion 2 can successively feed a plurality of trays 9, which are arranged at predetermined intervals in a vertical direction as shown in Fig. 1, one by one from the one positioned at a lowest position (for example, see JP 2002-240946 A). The tray feed portion 2 feeds the tray 9 to a back surface of one end side of the device main body 1 (stop position P1 of Fig. 2).

(ii) Tray recovery portion: The tray recovery portion 3 successively raises and retains the trays 9 to which ampoules 10 are fed, at predetermined intervals, and has the same structure as that of the tray feed portion 2. The tray recovery portion 3 recovers the trays 9 at a front surface of the one end side (stop position P8) of the device main body 1.

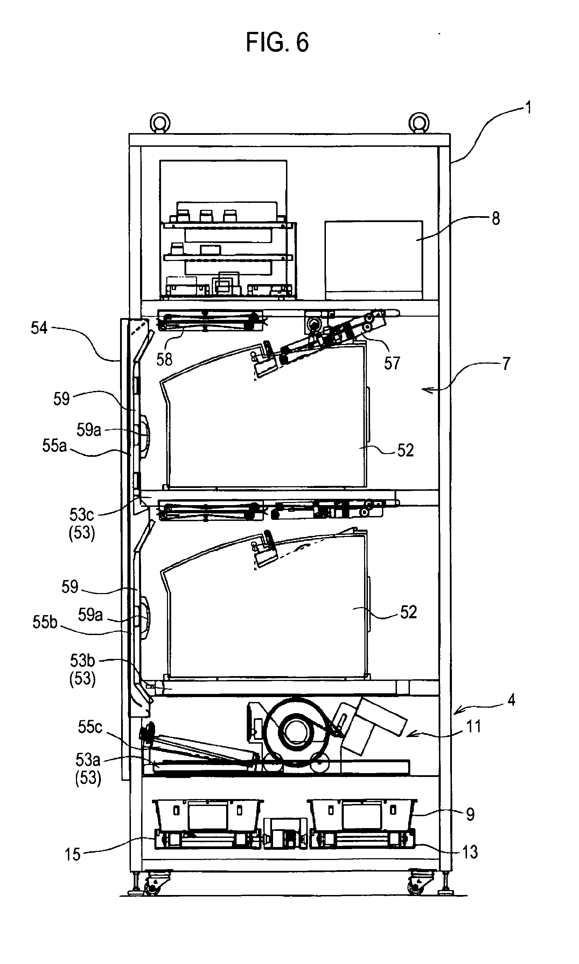

(iii) Label feed portion: As described below, the label feed portion 4 performs printing on a label based on prescription data and feeds the label to the tray 9. As shown in Fig. 6, the label feed portion 4 is provided to a shelf 53 (first shelf 53a) provided above a position (stop position P2 of Fig. 2) to which the tray 9 is transferred a predetermined dimension from the stop position P1. As described below, the first shelf 53a can be drawn out to a front panel 54 side. Here, there is used the label feed portion 4 in which three label printers 11 are arranged in parallel to each other so as to correspond to three storage chambers into which an inner portion of the tray 9 is divided (in a direction perpendicular to a transfer direction thereof). Note that there may be provided a structure in which one label printer 11 is provided, and the printed labels are successively fed to each of the storage chambers of the tray 9. Note that the label is removed from a pasted board and is affixed to an infusion bottle or the like, which is to be separately fed, to be used.

(iv) Tray transfer portion: The tray transfer portion 5 is provided to a rectangular frame body 12 disposed below units constituting the device main body 1 as shown in Fig. 2, and includes a first transfer portion 13 for transferring the tray 9 fed from the tray feed portion 2 from the stop position P1 to a back surface of another end side (stop position P4), a second transfer portion 14 for transferring the tray 9 from the stop position P4 to a front surface of the other end side (stop position P5 side), and a third transfer portion 15 for transferring the tray 9 from the stop position P5 to the front surface of the one end side (stop position P8).

The first transfer portion 13 includes, as shown in Fig. 2, first, second, and third conveyor units 13A, 13B, and 13C, respectively, each of which includes a belt conveyor formed by providing pulleys to both ends of shafts provided at a predetermined interval and looping belts around those pulleys. (In Fig. 2, the belt conveyor disposed on a lower side label feed portion 4 is omitted.) To the stop position P1 (preparation position) of the first conveyor unit 13A, there are provided first tray detection sensors 16a and 16b. To the stop position P2 of the second conveyor unit 13B, there are provided second tray detection sensors 16c and 16d. To a stop position P3 of the third conveyor unit 13C, there are provided third tray detection sensors 16e and 16f. Further, the first conveyor unit 13A is provided with a passing tray detection sensor 16g for detecting the tray 9 moving from the stop position P1 toward the stop position P2. Further, the second conveyor unit 13B is provided with a passing tray detection sensor 16h for detecting the tray 9 moving from the stop position P2 toward the stop position P3. Each of those tray detection sensors 16a to 16h outputs an on signal when a bottom surface of the tray 9 which is transferred by the first transfer portion 13 is positioned thereon. Note that the belt conveyor (at least portions positioned on an upper surface) of the third conveyor unit 13B are inclined gradually upwardly in a transfer direction and form a predetermined step with respect to the second transfer portion 14.

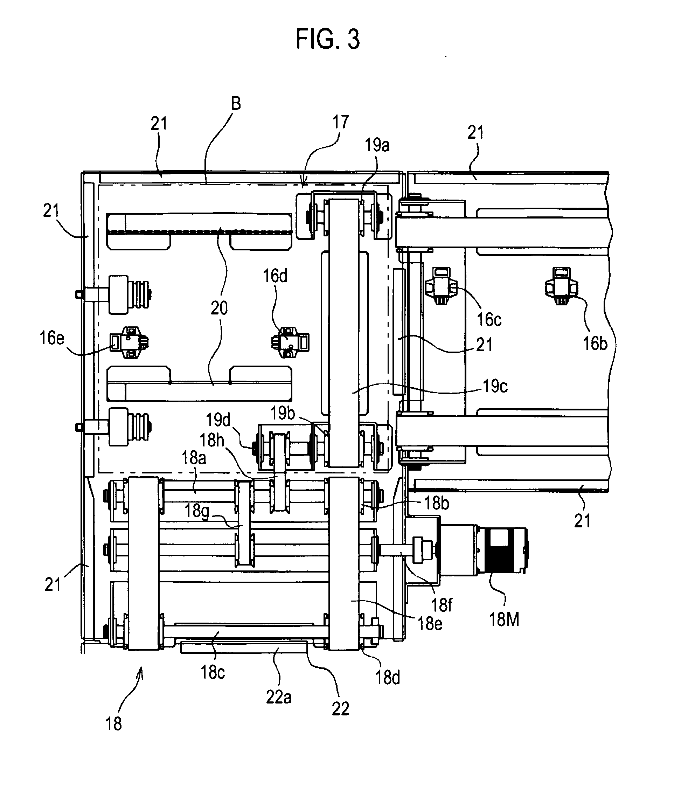

The second transfer portion 14 includes, as shown in Fig. 3, a fourth conveyor unit (first direction conversion portion) 17 and a fourth auxiliary conveyor unit 18.

The fourth conveyor unit 17 includes a first belt conveyor 19 provided at a position lower by a predetermined dimension (in this case, 5 mm) from an end portion on the transfer direction side of the first transfer portion 13, and a pair of guide rails 20 provided in parallel to each other along the transfer direction of the first transfer portion 13.

The first belt conveyor 19 is formed by looping a belt 19c around pulleys 19a and 19b, and is driven together with the fourth auxiliary conveyor unit 18 through rotation of a shaft 19d by a later-described drive motor 18M.

The guide rails 20 are formed so as to be gradually higher from a position lower than a placing surface of the first belt conveyor 19 (an upper surface of belt 19c on which tray 9 is placed) toward the transfer direction. At a highest position, the guide rails 20 are flush with the placing surface. The guide rails 20 are inclined so as to enable the tray 9 transferred from the first transfer portion 13 to be smoothly transferred without interfering with the guide rails 20. There may be provided the tray 9 which is deformed, and has a central portion of the bottom surface bulging downwardly. However, by the inclined guide rails 20, the interference can be reliably prevented.

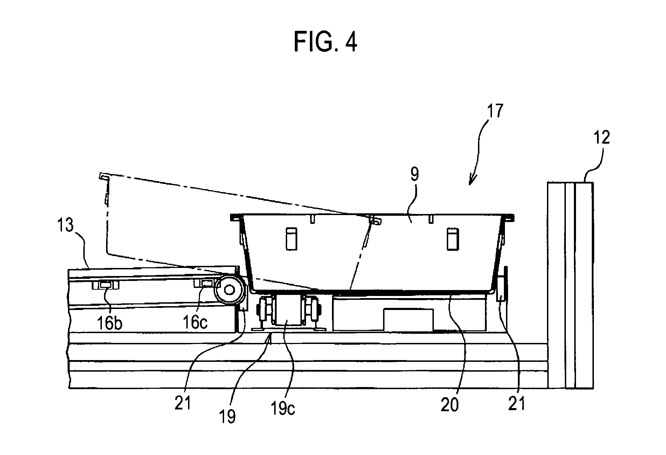

Further, a positional relationship between heights and distances of the first belt conveyor 19 and the guide rails 20 with respect to the first transfer portion 13 is designed such that, while the tray 9 is kept in a non-contact state with respect to the first belt conveyor 19 (tray 9 shown by a chain double-dashed line of Fig. 4), the tray 9 transferred by the first transfer portion 13 first abuts on the guide rails 20, and in a state where the movement from the first transfer portion 13 to the second transfer portion 14 (stop position P4) is completed (tray shown by a solid line of Fig. 4), the tray 9 is supported in a horizontal state by the upper surface of the first belt conveyor 19 and the highest position of the guide rails 20.

In the fourth conveyor unit 17, as shown in Fig. 2, there are formed guide walls 21 in the vicinity of a side of the first belt conveyor 19 and on two side surfaces of the rectangular frame body 12 perpendicular thereto. The guide walls 21 abut on three surfaces of the tray 9 transferred by the first transfer portion 13 to position the tray 9 in the stop position P4 (first direction converting position). Therefore, regardless of the a step formed between the first transfer portion 13 and the stop position P4, the tray 9 can be positioned in the stop position P4, thereby allowing the smooth transfer of the tray 9 to the third transfer portion 15.

In the stop position P4 (the vicinity of both ends of guide rails 20), as shown in Fig. 3, fourth tray detection sensors 16i and 16j are arranged, respectively, in the samemanner as described above. The fourth tray detection sensor 16i detects the tray 9 transferred from the first transfer portion 13 to the second transfer portion 14. The fourth tray detection sensor 16j detects that the tray 9 is reliably placed (not inclined) on the first belt conveyor 19 and the guide rails 20 in the second transfer portion 14. A detectable distance of the fourth tray detection sensor 16j is limited. Accordingly, when the tray 9 is inclined and is not close enough to the fourth tray detection sensor 16j, the tray 9 cannot be detected.

Note that it is preferable that the guide rails 20 be formed of rollers provided so as to be rotatable. With this structure, when compared to the case of the guide rails 20, the transfer of the tray 9 from the second transfer portion 14 to the third transfer portion 15 can be smoothly performed.

In this case, the rollers may be moved in association with the pulleys of the first belt conveyor 19. That is, rotation center shafts of the pulleys may be extended to be connected to rotation centers of the rollers. As a result, when the first belt conveyor 19 is driven, the rollers rotate, thereby making it possible to more smoothly transfer the placed tray 9.

In the fourth auxiliary conveyor unit 18, like in the first transfer portion 13, to both ends of each of shafts 18a and 18c provided at a predetermined interval, pulleys 18b and 18d are provided, respectively, and belts 18e are looped around the respective pulleys 18b and 18d. The fourth auxiliary conveyor unit 18 is gradually inclined upwardly toward the transfer direction. The fourth auxiliary conveyor unit 18 is driven by driving the drive motor 18M to rotate a rotation shaft 18f, and allowing the shaft 18a to rotate through the intermediation of the belt 18g. Further, a force transmitted to the shaft 18a is also transmitted to the shaft 19d through the belt 18h. As a result, the fourth auxiliary conveyor unit 18 and the fifth conveyor unit 19 are driven in synchronism with each other.

On the transfer direction side of the fourth auxiliary conveyor unit 18, a guide piece 22 is provided between the pulleys 18d. The guide piece 22 has an inclined surface 22a gradually inclined downwardly toward the transfer direction of the fourth auxiliary conveyor unit 18. By the inclined surface 22a, the tray 9 is smoothly transported to the third transfer portion 15 by the fourth auxiliary conveyor unit 18 and reversal of the tray 9 is prevented.

The third transfer portion 15 has, as shown in Fig. 2, substantially the same structure as that of the second transfer portion 14, and includes a fifth conveyor unit (second direction conversion portion) 23 and a sixth conveyor unit 24A, and in a forward side thereof, a seventh conveyor unit 24B and an eighth conveyor unit 24C. The fifth conveyor unit 23 includes belt conveyors 24a and 24b having different sizes. Note that guide rails 23a are formed of rollers like the guide rails 20 of the first transfer portion 13 and can be moved in association with the belt conveyor 24a.

The fifth conveyor unit 23 is provided with passing tray detection sensors 16k and 161 at two positions along the guide wall 21, thereby allowing detection of the tray moved from the stop position P4. The sensor 16k has a function corresponding to that of the sensor 16i, and the sensor 161 has a function corresponding to that of the sensor 16j . To the stop position P5 of the fifth conveyor unit 23, there are provided fifth tray detection sensors 16m and 16n. To a stop position P6 of the sixth conveyor unit 24A, there are provided sixth tray detection sensors 16o and 16p. To a stop position P7 of the seventh conveyor unit 24B, there are provided seventh tray detection sensors 16s and 16t. To the stop position P8 of the eighth conveyor unit 24C, there are provided eighth tray detection sensors 16u and 16v. The stop positions P5 and P6 are ampoule dispensing positions where the ampoule 10 fed by the ampoule feed portion 6 is stored in the tray 9. The inner portion of the tray 9 is divided into three to each of which the ampoules 10 stored in ampoule reservoir chambers 31 described later are fed. To the sixth conveyor unit 24A, a passing tray detection sensor 16q is provided on a way from the stop position P6 to the stop position P7. Further, to the seventh conveyor unit 24B, a passing tray detection sensor 16w is provided on a way from the stop position P7 to the stop position P8. Further, to the eighth conveyor unit 24C, a passing tray detection sensor 16x is provided on a way from the stop position P8 to an outside.

Note that, in the tray transfer portion 5, the first transfer portion 13 and the fourth auxiliary conveyor unit 18 of the second transfer portion 14 are gradually inclined upwardly toward the transfer direction. However, those may be disposed in the horizontal direction. In short, it suffices that a step (that prevents moved tray 9 from interfering with the belt conveyor) is formed when the tray 9 is transferred from the first transfer portion 13 to the second transfer portion 14, and from the second transfer portion 14 to the third transfer portion 15.

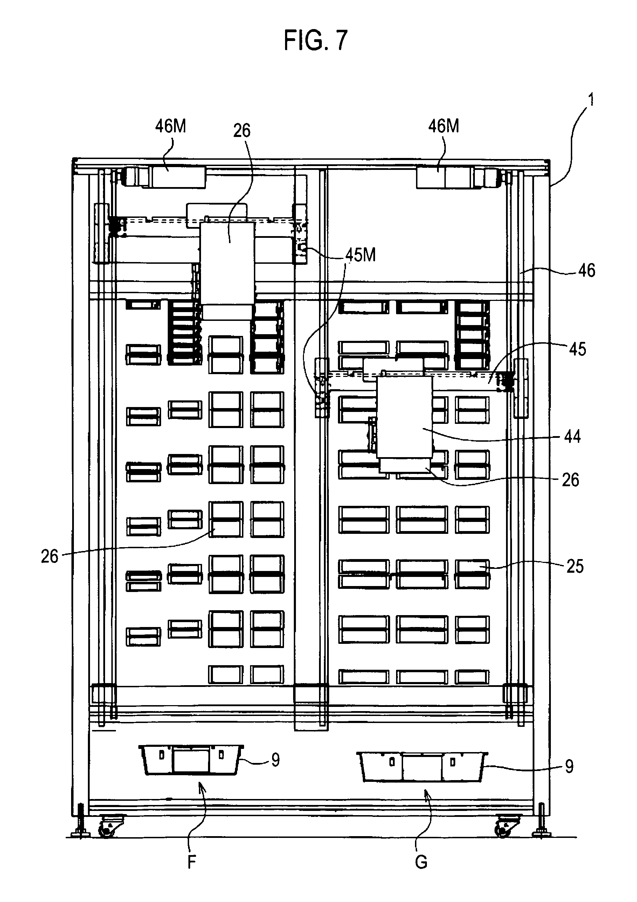

(v) Ampoule feed portion: The ampoule feed portion 6 includes, as shown in Fig. 7, a medicine storage portion and a medicine recovery portion. Here, as the medicine storage portion, there are used a plurality of cassettes 25 arranged in a matrix fashion (see International Publication No. 2004/034955 pamphlet). Further, as the medicine recovery portion, as described below, there is used an ampoule recovery portion 26 for recovering the ampoule 10 dispensed from the target cassette 25 based on the prescription data.

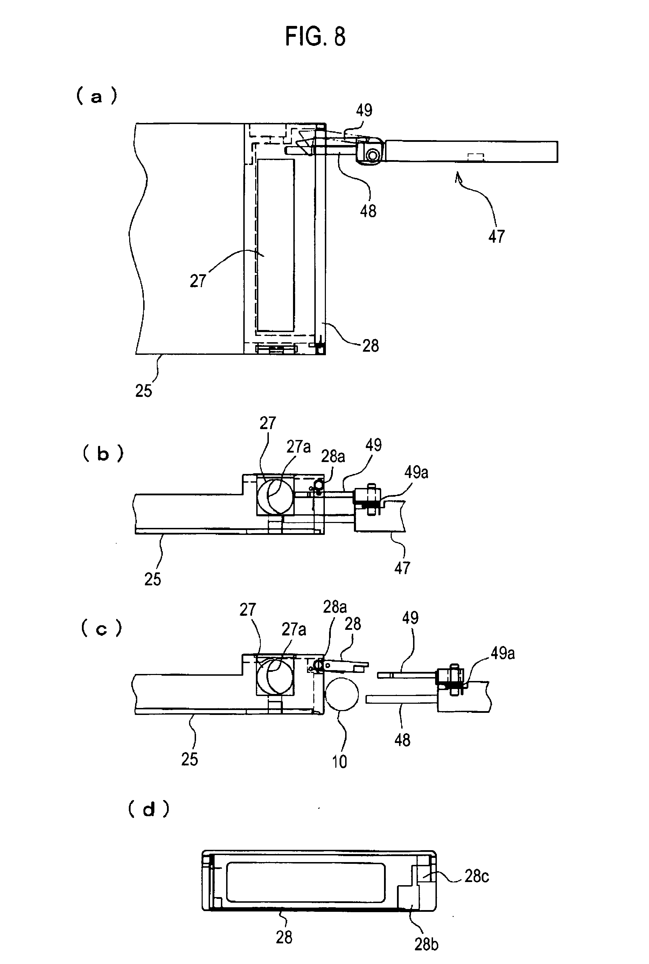

In each of the cassettes 25, as shown in Fig. 8, the plurality of ampoules 10 storing injection medicines of the same kind are stored while being biased toward a rotor 27 provided on one end side. The rotor 27 has a recess section 27a capable of retaining a single ampoule 10. The rotor 27 is biased by a spring (not shown) such that the recess section 27a faces a front surface side. When a rod 48 is inserted into the cassette 25 as described below and the recess section 27a is allowed to face the ampoule side, the biased ampoule 10 is retained in the recess section 27a. When the rod 48 is retracted from the inside of the cassette 25, the rotor 27 is returned to an original position by a bias force of the spring, thereby allowing the ampoule 10 retained in the recess section 27a to be discharged. On one end side of the cassette 25, a front surface door 28 rotatable about a shaft portion is provided. The front surface door 28 is biased by a spring 28a provided to the shaft portion so as to close an open portion 64 at one end of the cassette 25. To a surface of the front surface door 28, cassette identification means including a cassette number, a medicine name, a photograph showing an appearance of the medicine, and the like is provided. As a result, an operation of filling the cassette 25 with the ampoules can be smoothly performed. Further, on one end side of the front surface door 28, as shown in Fig. 8(d), a rod insertion portion 28b and a lock claw insertion portion 28c are formed.

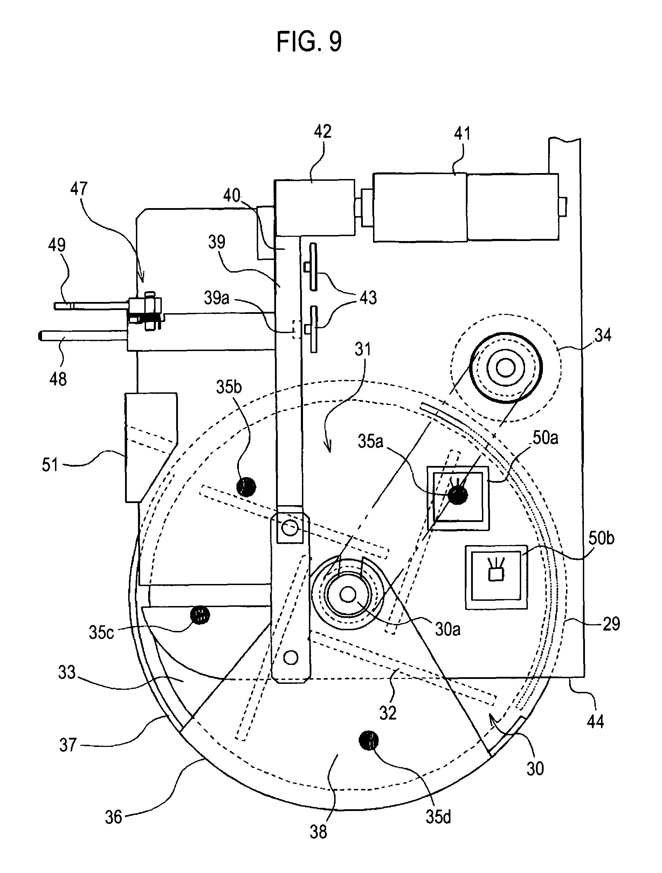

The ampoule recovery portion 26 includes, as shown in Fig. 9, an ampoule storage drum 29 having a cylindrical shape and an open portion 64 serving as an put-in port and discharge port on an outer peripheral surface thereof.

An inside of the ampoule storage drum 29 is equally divided into the four ampoule reservoir chambers 31 by a partition member 30. The partition member 30 is formed by arranging four partition plates 32 perpendicularly to each other around a support shaft 30a. Both side surfaces of the partition member 30 are covered with end plates 33. In each of the ampoule reservoir chambers 31, the ampoules 10 are to be stored in desirable storage patterns. In this case, the ampoules 10 for one receipt are stored. (In this case, it means all the ampoules 10 prescribed during one dose period of a certain patient.) The partition member 30 is rotatable in the ampoule storage drum 29 about the support shaft 30a by the driving of the rotarymotor 34 . Each of the endplates 33 has four of detection objectportions 35a to 35h (in this case, permanent magnets) provided at four positions thereon.

The open portion 64 of the ampoule storage drum 29 has a lower portion (discharge port) which is opened and closed by a drum-type shutter 8036 rotatable about the support shaft 30a. The drum-type shutter 8036 includes a circular arc plate 37 for covering the discharge port and an arm plate 38 which is formed in a fan shape and is rotatably supported by the support shaft 30a.

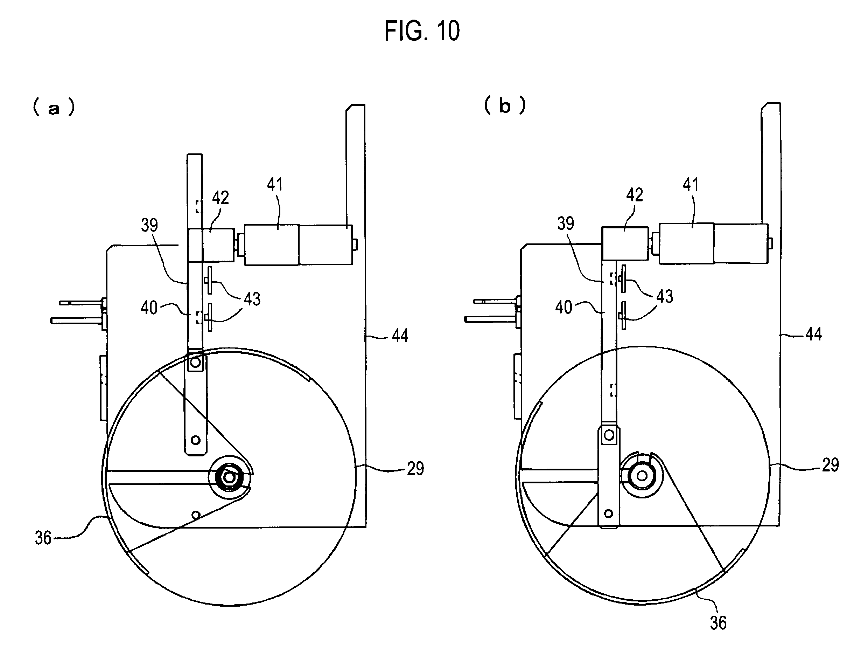

To the arm plate 38, one end portion of a link 39 is rotatably connected. On the link 39, a rack gear 40 is formed, with which a pinion gear 42 provided to a rotation shaft of an open/close motor 41 is meshed. Accordingly, when the open/close motor 41 is rotated forward and backward, the link 39 ascends and descends through the intermediation of the gear, thereby rotating the drum-type shutter 8036 about the support shaft. An ascent/descent range of the link 39 is limited by detecting permanent magnets 39a, which are provided at two positions on the link 39, by an ascent/descent sensor 43. The drum-type shutter 8036 can be positioned at each of an opening position as shown in Fig. 10 (a) and a closing position as shown in Fig. 10(b).

The ampoule recovery portion 26 is mounted to a support base 44 moving in an XY coordinate system as shown in Fig. 7. The support base 44 is mounted to a horizontal belt 45 provided in an X axis direction and can be reciprocatingly moved in a horizontal direction by a horizontal drive motor 45M. The horizontal belt 45 is mounted to a vertical belt 46 provided in a Y axis direction and is reciprocatingly moved in a vertical direction by a vertical drive motor 46M.

The support base 44 moves to the target cassette 25 based on the prescription data and allows a pusher unit 47 to advance or retreat by using a motor (not shown), thereby rotating the rotor 27 of the cassette 25 to allow the ampoule 10 to be dispensed.

The pusher unit 47 includes, as shown in Fig. 8, the rod 48 and a lock claw portion 49. The rod 48 is inserted into the cassette 25 through the rod insertion portion 28b formed in the front surface door 28 of the cassette 25. A front end of the rod 48 abuts on a part (not shown) of the rotor 27 to rotate the rotor 27 against the bias force of the spring (not shown). As a result, the rotor 27 rotates such that the recess section 27a faces an inner side of the cassette 25. The lock claw portion 49 is biased by a spring 49a in a rotation direction and maintains a state shown by a solid line of Fig. 8(a) by abutting on a stopper (not shown). The lock claw portion 49 is rotated as shown by a chain double-dashed line of Fig. 8(a) by allowing a front end claw portion thereof to be inserted into the lock claw insertion portion 28c formed in the front surface door 28, and is returned to an original position by the bias force of the spring to be locked by an edge portion of the front surface door 28. Accordingly, when the pusher unit 47 is retreated, as shown in Fig. 8(c), the front surface door 28 is opened by the lock claw portion 49. Further, the rotor 27 is rotated to be returned to the original position by the bias force of the spring, and allows the recess section 27a to face the front side. Accordingly, the ampoule 10 retained by the recess section 27a is dispensed from the cassette 25.

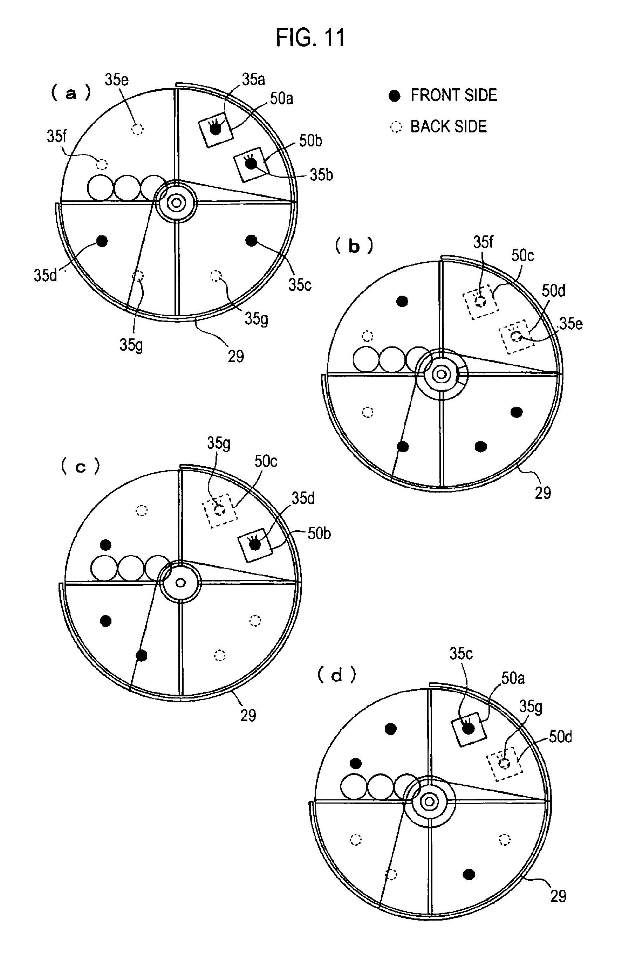

To both side walls constituting the support base 44, position detection sensors 50a, 50b, and 50c, 50d are provided for detecting the detection object portions 35a, 35b, 35c, 35d, and 35e, 35f, 35g, 35h, respectively, which are provided to the partition member 30 rotating in the ampoule storage drum 29. As shown in Fig. 11, the position detection sensors 50a to 50d detect the corresponding detection object portions 35a to 35h, thereby allowing positioning of each of the ampoule reservoir chambers 31 at a put-in position of the ampoule 10 from the cassette 25 and a discharge position of the ampoule 10 to the tray 9. That is, depending on which of the detection object portions 35a to 35h is detected by which of the position detection sensors 50a to 50d, the ampoule reservoir chamber 31 positioned at theput-inposition or the discharge position can be specified.

On a front surface portion of the support base 44 (portion facing the cassette 25 side), as shown in Fig. 9, there is provided an ampoule put-in guide 51. A bottom surface of the ampoule put-in guide 51 is positioned in the same plane as the partition plate 32 constituting a part of each of the ampoule reservoir chambers 31 positioned by detecting the detection object portion 35 by the position detection sensor 50. As a result, the ampoule 10 in the ampoule storage drum 29 can be smoothly put into the ampoule reservoir chamber 31 through the ampoule put-in guide 51.

Note that, in this case, the ampoule 10 is fed by the ampoule feed portion 6 as a medicine. However, there may be employed a structure in which medicines in other modes such as vials or PTP tablets can be fed.

(vi) Injection prescription feed portion: The injection prescription feed portion 7 includes, as shown in Fig. 6, two laser printers 52 for printing the injection prescription. The laser printers 52 are disposed on shelves 53 at two positions (second shelf 53b and third shelf 53c), respectively, which are positioned above the label printer 11. Each of the shelves 53 can be drawn out forward by opening the front panel 54 of the device main body 1 . The injection prescription printed by the laser printer 52 is fed by an injection prescription discharge member 60 into the tray 9 through a feed path 55.

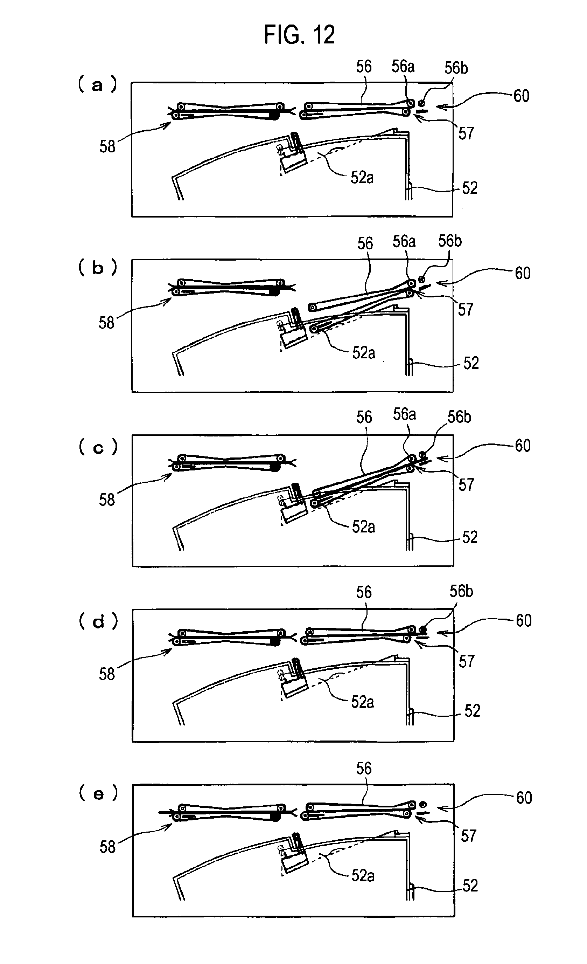

The injection prescription discharge member 60 includes, as shown in Fig. 12, a pivotal transfer portion 57 in which a pair of arm members 56 can rotate about a support shaft 56a on an upper side and can pivot about a support shaft 56b, and a fixed transfer portion 58 for making a continuous transfer path in a state where the pivotal transfer portion 57 is rotated to a horizontal position.

The feed path 55 is formed, as shown in Fig. 6, on an inner surface of the front panel 54 of the device main body 1. Specifically, to the inner surface of the front panel 54, a guide plate 59 is mounted with its both side portions being bent in a right-angle direction and its upper end side being extended inwardly. The guide plate 59 is provided with a grip 59a. By gripping and pulling the grip 59a, the guide plate 59 can be opened with respect to the front panel 54. Further, the two guide plates 59 are vertically arranged at a predetermined interval so as to allow passage of the injection prescription transferred by the injection prescription discharge member 60 from the laser printer 52 provided in each of two upper and lower stages. Accordingly, the injection prescription fed from the laser printer 52 disposed on the upper side passes through an upper side feed path 55a and a lower side feed path 55b formed by the guide plates 59, respectively. Further, the injection prescription fed from the laser printer 52 disposed on the lower side passes through the lower side feed path 55b. After the injection prescriptions are allowed to wait in an injection prescription wait portion 55c provided in the vicinity of the label printer 11 on the lower side, the injection prescriptions are successively discharged to the trays 9.

With the injection prescription feed portion 7 having the above-mentioned structure, by opening the front panel 54 to draw out each of the shelves 53, it is possible to easily resolve jamming or the like of the injection prescriptions in the label printer 11, the laser printer 52, the injection prescription discharge member 60, and the feed path 55. Further, even from the feed path 55, when the guide plate 59 is opened by gripping the grip 59a, the injection prescription jammed in the feed path 55 can easily be taken out. That is, maintenance can be performed from a front surface side of the device main body 1, thereby enhancing operability.

(vii) Control portion: The control portion 8 drives and controls each of components, based on the prescription data (data related to contents of the prescription prepared by a doctor) input from a host computer or the like (not shown) or an input signal from each of the sensors, as described below.

### (Operation)

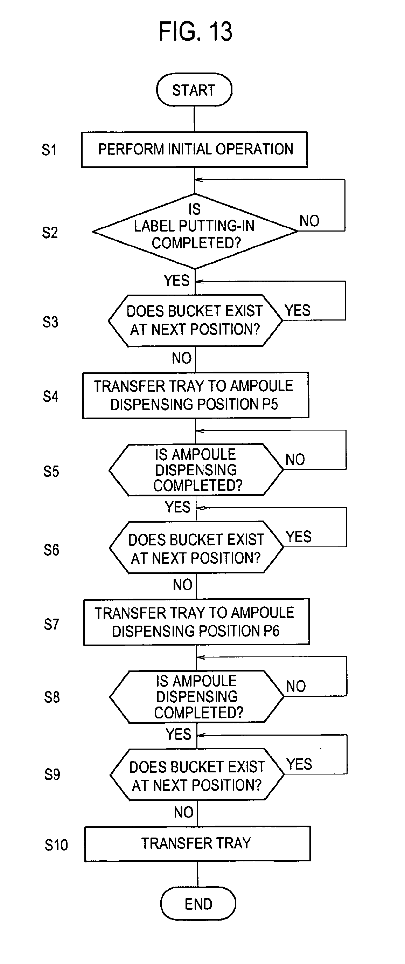

Next, an operation of the ampoule dispenser of the above-mentioned structure will be described with reference to a flow chart of Fig. 13.

Based on the input prescription data, the tray 9 is fed from the tray feed portion 2, and tray transfer processes are executed as follows. The tray 9 fed to the stop position P1 is detected by the first tray detection sensors 16a and 16b, so the first conveyor unit 13A is driven, and the tray 9 is transferred to the stop position P2. That is, an initial operation of disposing the tray 10 to both the stop position P1 and P2 is executed (Step S1).

In the stop position P2, the label printer 11 is driven based on the prescription data to print a medicine name or the like of the ampoule 10 to be stored on a label, and the label is fed to the target storage chamber of the tray 9 (label feeding process).

When the feeding of the label on which the printing has been performed is completed (Step S2), based on the determination of or not the tray 9 is detected by the second tray detection sensors 16c and 16d and the third tray detection sensors 16e and 16f, it is determined whether or not the tray 10 which has been transferred first is positioned in a position to which the tray 10 is to be transferred next (Step S3).

When the tray 9 is not detected by the second tray detection sensors 16c and 16d, the first and second conveyor units 13A and 13B are driven to transfer the tray 9 to the stop position P2 in which the tray 9 is detected by both the sensors 16c and 16d. Further, when the tray 9 is not detected by the third tray detection sensors 16e and 16f, the second and third conveyor unit 13B and 13C are driven to transfer the tray 9 to the stop position P3 in which the tray 9 is detected by the sensors 16e and 16f.

On the other hand, when the tray 9 is detected by the second tray detection sensor 16c or 16d, the first and second belt conveyors 13A and 13B are not driven, and the tray 8 is allowed to wait in the stop position P1. Further, the tray 9 is detected by the third tray detection sensor 16e or 16f, the second and third belt conveyors 13B and 13C are not driven, and the tray 9 is allowed to wait in the stop position P2.

Subsequently, it is determined whether or not the tray 9 is detected by the fourth tray detection sensor 16i or 16j.

When the tray 9 is not detected in this position, the third belt conveyor 13C is driven to transfer the tray 9 from the stop position P3 of the third conveyor unit 13C to the stop position P4 of the fourth conveyor unit 14. The end portion in the transfer direction of the first transfer portion 13 is positioned on an upper side of the first belt conveyor 19 of the second transfer portion 14. Accordingly, a leading end portion of the tray 9 abuts on the guide rails 20 from the first transfer portion 13 without coming into contact with the first belt conveyor 19. The tray 9 slides on the guide rails 20 while being supported by both the first transfer portion 13 and the guide rails 20 by the driving of the first transfer portion 13 . The guide rails 20 are gradually inclined upwardly toward the transfer direction of the tray 9, and supports the tray 9 in the horizontal state when the tray 9 is placed on the first belt conveyor 19. In this state, the guide walls 21 are positioned in the vicinity of the three side surfaces of the tray 9 or abut thereon. Accordingly, the tray 9 is appropriately positioned without rotating in a horizontal surface or the like in the first direction conversion portion 17.

On the other hand, when the tray 9 is detected by the fourth tray detection sensor 16i or 16j, the third conveyor unit 13C is not driven, and the tray 9 is allowed to wait in the stop position P3.

When the tray 9 is transferred to the stop position P4, depending on whether or not the tray 9 is detected by the fifth tray detection sensors 16m and 16n, presence or absence of the tray 9 in the stop position P5 is determined. When it is determined that the tray 9 does not exist in the stop position P5, the first belt conveyor 19 is driven to transfer the tray 9 to the third transfer portion 15. By the driving of the first belt conveyor 19, the tray 9 moves while sliding on the guide rails 20. Similarly to the sensors 16i and 16j, by the passing position detection sensors 16k and 161, it is determined whether or not the tray 9 is appropriately transferred from the stop position P4 to the third transfer portion 15. When tray detection signals are input from the sensors 16k and 161, the fifth conveyor unit 23 is driven to transfer the tray 9 to the stop position P5 (Step S4). When the tray 9 is transferred to the stop position P5, based on the prescription data, the target ampoules 10 are dispensed from the cassette (Step S5).

After the ampoules 10 have been dispensed to the tray 9 in the stop position P5, it is then determined whether or not the tray 9 is detected by the sixth tray detection sensor 16o or 16p (Step S6). When the tray 9 is detected by the sensor 16o or 16p, it is determined that the ampoules 10 are being dispensed to the foregoing tray 9 in the stop position P6, or that the tray 9 is being moved to the next stop position P7, so a standby state continues as it is. When the tray 9 is not detected by either of the sensors 16o and 16p, the fifth conveyor unit 23 and the sixth conveyor unit 24A are driven to transfer the tray 9 positioned in the stop position P5 to the stop position P6 (Step S7). The tray 9 is then stopped in the stop position P6 and the target ampoules 10 are dispensed into the tray 9 like in the above-mentioned Step S5 (Step S8).

When all the target ampoules 10 are dispensed to each of the storage chambers of the tray 9 based on the prescription data, it is determined whether or not the foregoing tray 9 is detected by the seventh tray detection sensor 16s or 16t. When it is determined that the foregoing tray 9 does not exist in the stop position P7, the seventh conveyor unit 24B is driven to transfer the tray 9 to the stop position P7. Further, similarly, based on the determination of whether or not the foregoing tray 9 is detected by the eighth tray detection sensor 16u or 16v, the next tray 9 is transferred to the stop position P8 (Step S9, and Step S10). In the stop position P7 , the injection prescription is fed from the injection prescription feed portion 7.

Note that, in the third transfer portion 15, the stop position of the tray 9 may be selected according to the feeding position of the ampoule 10. That is, in a case of feeding the ampoule 10 from a cassette group of a left half of Fig. 7, the fifth conveyor unit 23 is driven and controlled, and based on the detection signals of the fifth tray detection sensors 16m and 16n, the tray 9 is stopped in the stop position P5. Further, in Fig. 7, in a case of feeding the ampoule 10 from a cassette group of a right half of Fig. 7, the sixth conveyor unit 24A is also driven and controlled, and based on the detection signals of the sixth tray detection sensors 16o and 16p, the tray 9 is stopped in the stop position P6. Further, in a case of feeding the injection prescription to the tray 9 for which feeding of the ampoules 10 is completed, the belt conveyor 24C is driven and controlled, and based on the detection signals of the seventh tray detection sensors 16s and 16t, the tray 9 is stopped in the stop position P7.

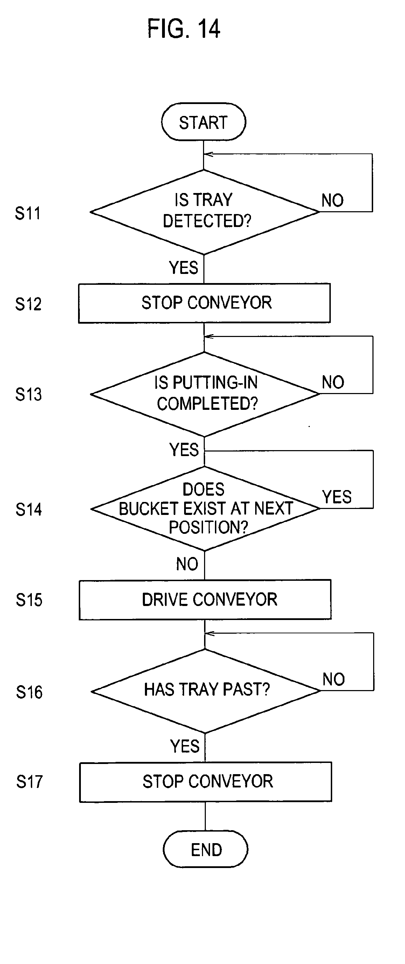

Meanwhile, in the tray transfer processes, in order to stop the tray 9 in each of the stop positions and to transfer the tray 9 to the next stop position, as shown in a flow chart of Fig. 14, each of the belt conveyors are driven and controlled as follows.

That is, the conveyor unit is driven, and in the stop position, it is determined whether or not the tray 9 is detected by the pair of sensors provided thereto (Step S11). When the tray 9 is detected in the stop position, the conveyor unit is stopped (Step S12) . In the stop position P2, P5, P6, or P7, it is determined whether or not the label, the ampoule, or the injection prescription is put into the tray 9 (Step S13). Then, it is determined whether or not the tray 9 exist in the next stop position (Step S14, and when the determination indicates that the tray 9 does not exist therein, the conveyor unit is driven (Step S15). At this time, it is detected by the passing tray detection sensor whether or not the tray 9 is appropriately transferred (Step S15). Note that the driving of the conveyor unit is performed not only for the tray 9 to be transferred at that time, but also for the former one. When the tray 9 is completely moved from the stop position to the next stop position, the driving of the conveyor unit is stopped (Step S16). Note that the stoppage of the conveyor unit in this case may be performed in response to the detection of the tray 9 by both the sensors in the next stop position.

At the same time with a series of the transfer processes for the tray 9 as described above, the label is fed from the label feed portion 4 (label feeding process), the target ampoule 10 is fed from the ampoule feed portion 6 (ampoule feeding process), and the injection prescription is fed from the injection prescription feed portion 7 (injection prescription feeding process). The label feeding process is the same as that of a related art, so in the following, the ampoule feeding process and the injection prescription feeding process will be described.

### (Ampoule feeding process)

In the ampoule feed portion 6, the support base 44 is moved to the cassette 25 in which the target ampoule 10 based on the prescription data is stored. The pusher unit 47 is then advanced to rotate the rotor 27 by the rod 48, thereby facing the recess section 27a toward the inner side of the cassette 25 to retain the ampoule 10 in the recess section 27a. Here, when the pusher unit 47 is retreated, the rotor 27 rotates to be returned to the original position by the bias force of the spring. Further, by the lock claw portion 49 locked on the front surface door 28, the front surface door 28 is forcibly opened.

In this case, in the ampoule storage drum 29, the position detection sensor 50 detects the detection object portion 35, thereby selecting and setting the ampoule reservoir chamber 31 to be continuous with the ampoule put-in guide 51. As a result, the ampoule 10 dispensed from the cassette 25 can be held in the desired ampoule reservoir chamber 31.

The target ampoules 10 dispensed to the one ampoule reservoir chamber 31 include all the ampoules 10 provided in one dose period of the prescription data. Accordingly, when the ampoules 10 of different kinds are included, the ampoule recovery portion 26 is moved to the cassette 25 in which the target ampoule 10 is stored, and the same process is executed.

When the dispensing of all the ampoules 10 provided in the one dose period to the ampoule reservoir chamber 31 is completed, the same process is executed for all the ampoules 10 provided in a next dose period. In this case, the partition member 30 is rotated to set the next ampoule reservoir chamber 31 to be continuous with the ampoule put-in guide 51.

Here, no matter who the patient is, all the ampoules 10 provided in the one dose period are dispensed successively to the vacant ampoule reservoir chambers 31. When the ampoules 10 are stored in all the ampoule reservoir chambers of the ampoule recovery portion 26, the ampoule recovery portion 26 is moved to the ampoule dispensing position.

Note that the ampoules 10 to be held in each of the ampoule reservoir chambers 31 of the ampoule recovery portion 26 may be set to only day's dose of one patient, and can be freely set based on applications.

In the ampoule recovery portion 26, after the ampoule recovery portion 26 is moved to the ampoule dispensing position, the ampoules 10 held in the ampoule reservoir chambers 31 are successively fed to the storage portions of the tray 9, respectively (ampoule feeding process).

Specifically, in the ampoule recovery portion 26, the partition member 30 is rotated based on the detection signal of the position detection sensor 50, thereby positioning the ampoule reservoir chamber 31 storing the target ampoules 10 in the dispensing position. The open/close motor 41 is then driven to rotate the drum-type shutter 8036 to the opening position. As a result, the ampoules 10 held in the ampoule reservoir chamber 31 are fed to the storage chamber of the tray 9.

Subsequently, the ampoule recovery portion 26 is moved to a position above the next storage chamber. In this case, the open/close motor 41 is reversely driven to rotate the drum-type shutter 8036 to the closing position. Further, the rotary motor 34 is driven to rotate the partition member 30, and the next ampoule reservoir chamber 31 is positioned in the dispensing position. In the same manner, the drum-type shutter 8036 is rotated to the opening position, and the ampoules 10 are fed to the storage chamber of the tray 9.

In the same manner, feeding of the ampoules 10 held in all the ampoule reservoir chambers 31 of the ampoule recovery portion 26 is performed. Here, while the ampoule reservoir chambers 31 are formed in four sections in the ampoule recovery portion 26, the storage portions of the tray 9 are formed in three sections. Accordingly, in a case where the ampoules 10 are held in all the ampoule reservoir chambers 31, when the dispensing process for the ampoules 10 from the ampoule reservoir chambers 31 in the three sections is completed, the ampoule recoveryportion 2 6 is left standby at an ampoule feeding position F or G until the next tray 9 is transferred.

### (Injection prescription feeding process)

In the injection prescription feed portion 7, the prescription is printed by the laser printer 52, and the prescription is fed to the tray 9 stopped in an injection prescription feeding position H.

In the laser printer 52, the prescription is printed based on the prescription data. Before the injection prescription is discharged, the injection prescription discharge member 60 is driven to pivot the pivotal transfer portion 57 to a delivery portion 52a of the laser printer 52 (see Fig. 12 (b)). In the delivery portion 52a, the arm members 56 of the pivotal transfer portion 57 is opened to be allowed to wait. As a result, the injection prescription discharged from the laser printer 52 can be positioned between the arm members 56. In this case, the arm members 56 are rotated so as to be close to each other (see Fig. 12 (c)) , and in a state where the injection prescription is sandwiched, the pivotal transfer portion 57 is rotated to the horizontal position (see Fig. 12 (d)). At this time, the pivotal transfer portion 57 is driven to move the injection prescription to a pivot center side such that, even when the pivotal transfer portion 57 pivots, the fixed transfer portion 58 is prevented from interfering with the injection prescription. When the pivotal transfer portion 57 rotates to the horizontal position, the pivotal transfer portion 57 is reversely driven. Further, the fixed transfer portion 58 rotates in the same manner, thereby transferring the injection prescription to the front panel 54 side (see Fig. 12(e)). Note that, in the feeding of the injection prescription, a plurality injection prescriptions discharged from the laser printer 52 may be collectively transferred at once by the pivotal transfer portion 57. Accordingly, each of the pivotal transfer portion 57 and the fixed transfer portion 58 are provided with a spring mechanism, thereby making it possible to perform the transfer while maintaining an appropriate pressing force in either of the cases where the number of the injection prescription is one and where the number of the inj ectionprescription is multiple.

On the inner surface of the front panel 54, the injection prescription is transferred to the lower side through the feed path 55 formed by the guide plate 59, is temporarily held in the injection prescription wait portion 55c, and is then fed to the target tray 9.

As described above, in the above embodiment, the tray 9 is transferred in an order of a preparation position A, a first direction converting position B, a second direction converting position C, and a recovery position D in a substantially U shape, and the laser printer 52 and the label printer 11 are arranged in the vertical direction, thereby making it possible to compactize the entire device in a width direction (right and left direction of Fig. 1). Further, a label feeding position E and an injection prescription feeding position G are set in a fore and aft direction of the device main body 1. As a result, the label printer 11 and the laser printer 52 are arranged in the vertical direction, and the front panel 54 can be opened to draw out to the front surface the shelf 53 on which each of the printers is placed. Accordingly, excellent maintenance property is obtained. Further, with the provision of the step, at the time of transferring the tray 9, direction conversion can be performed at higher speed. Further, dispensing of the ampoules 10 from the cassettes 25 can be performed at once by the ampoule recovery portion 26. Accordingly, together with the high-speed transfer of the tray 9, the ampoules 10 can be quickly stored in the tray 9.

The labels, the ampoules 10, and the trays 9 to which the injection prescriptions are fed are then transferred to the tray recovery portion 3. In the tray recovery portion 3, the trays 9 which are transferred are successively raised and retained. A pharmacist takes out each of the retained tray 9 and inspects whether or not the ampoules 10 stored are appropriate according to the printed contents of the injection prescription. Further, the pharmacist affixes the stored label to the target ampoule 10. The injection prescription is fed into the tray 9 after the labels are fed and the ampoules 10 are fed. Accordingly, in the inspection, while looking at the injection prescription placed on the top, the pharmacist can confirm the ampoules 10 in the tray 9, so the operation can be carried out with efficiency.

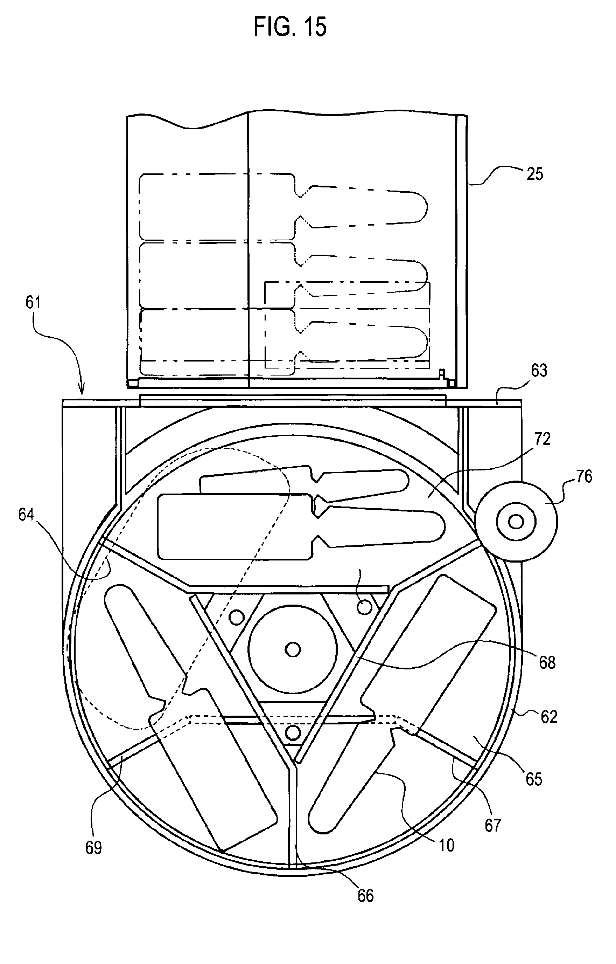

Note that, in the above embodiment, the ampoule recovery portion 26 has the structure shown in Fig. 9, but may have a structure shown in Fig. 15.

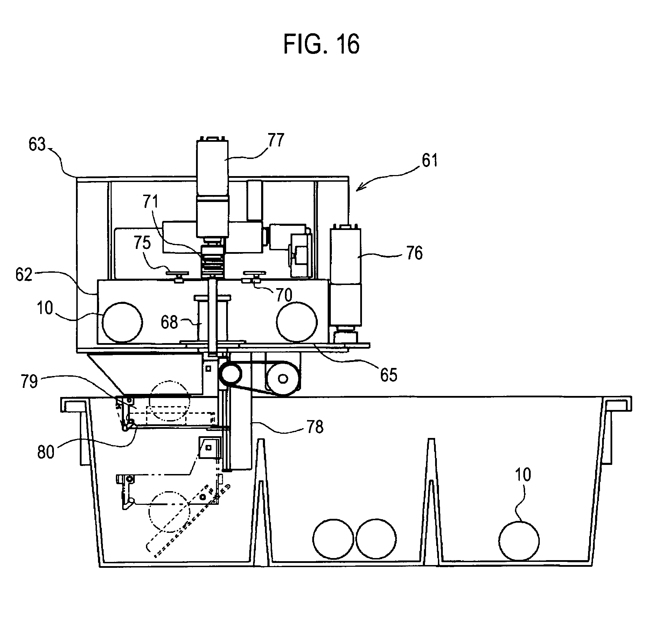

That is, the ampoule recovery portion 26 shown in Figs. 15 and 16 includes a stocker 61. The stocker 61 includes an ampoule recovery cylinder portion 62 and a guide portion 63.

The ampoule storage cylinder portion 62 has a bottomed cylinder shape whose axial direction is directed in a vertical direction. A bottom surface of the ampoule storage cylinder portion 62 is formed with the open portion 64 for dispensing the stored ampoules 10. The open portion 64 is provided so as to be slightly inclined with respect to a direction perpendicular to the transfer direction of the tray 9. As described below, the ampoules 10 are held in an ampoule container 79 in an aligned state.

In the ampoule storage cylinder portion 62, there are provided a shutter member 65 and a partition member 66 which can rotate independently of each other.

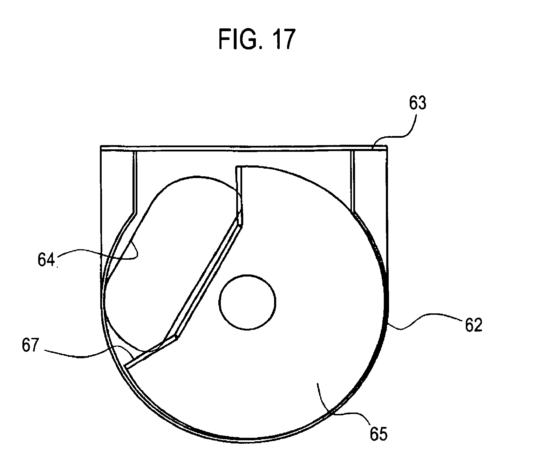

The shutter member 65 has, as shown in Figs. 16 and 17, a disk shape and a notch portion 67 formed in a part of an outer peripheral portion thereof. The shutter member 65 is rotatably mounted to a shaft portion 62a provided to a center of the ampoule storage cylinder portion 62. By rotating the shutter member 65, the notch portion 67 is allowed to match the open portion 64 of the ampoule storage cylinder portion 62, thereby making it possible to dispense the stored ampoules 10 through the open portion 64. On the outer peripheral portion of the shutter member 65, a gear portion (not shown) is formed, to which a gear portion (not shown) integrated with a rotation shaft of a shutter motor 76 provided to the guide portion 63 is meshed. As a result, when the shutter motor 76 is driven, the shutter member 65 rotates through the gear portion, thereby making it possible to move the notch portion 67 to open the open portion 64 of the ampoule storage cylinder portion 62.

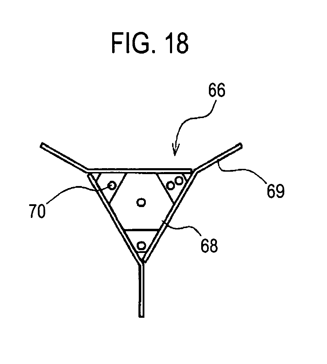

The partition member 66 includes, as shown in Figs. 15 and 18, a bearing portion 68 at a central portion thereof, having a right triangle shape in a plan view, and partition plates 69 extending from corner portions to an outer diameter direction. The bearing portion 68 is rotatably supported by a shaft portion 62a of the ampoule storage cylinder portion 62. The corner portions of the bearing portion 68 is provided with positioning sensors 70 (magnets), respectively. The partition member 66 can be rotated through a coupling 71 by driving of a drive motor 77 provided to the guide portion 63 described later. The partition plates 69 divide an inside of the ampoule storage cylinder portion 62 into three ampoule storage chambers 72. Each of the ampoule storage chambers 72 can store the ampoules 10 in a lateral orientation (direction perpendicular to radius direction). Accordingly, in a state where the open portion 64 of the ampoule storage cylinder portion 62 is opened by the notch portion 67 of the shutter member 65, when the partition member 66 is rotated to move the ampoule storage chambers 72 in a peripheral direction, the stored ampoules 10 can be smoothly dispensed through the open portion 64. Note that, each of the ampoule storage chambers 72 is used by storing therein, for example, the ampoules 10 for each dose period (morning, daytime, evening, or the like).

The guide portion 63 has a vertical surface portion extending along an ampoule dispensing side of the cassette 25. The vertical surface portion is formed with an opening allowing passage of the ampoules 10 therethrough, which are dispensed from the cassette 25. Further, the guide portion 63 is provided with a pusher 73 for opening and closing a cover on one end side of the cassette 25 to allow the ampoules 10 to be dispensed one by one, an ampoule detection sensor 74 for detecting the dispensed ampoules, and a rotation position detection sensor 75 for detecting each of the positioning sensors 70 provided to the partition member 66. The guide portion 63 is also provided with the shutter motor 76 for rotating the shutter 80 and the drive motor 77 for rotating the partition member 66.

An upper end portion of the guide portion 63 is extended laterally. To the upper end portion, a slider 63a is mounted. The slider 63a is supported by an ascent/descent member (not shown), which ascends and descends on the front surface of the device main body 1, so as to be reciprocatinglymovable in the horizontal direction. Further, a lower end portion of the guide portion 63 is also extended laterally. To the lower end portion, an ascent/descent rail 78 is provided, thereby allowing the ampoule container 79 to ascend and descend. The ampoule container 79 is vertically long, in which the ampoules 10 dispensed from the ampoule recovery portion 6 are temporarily held in the aligned state. The ampoule container 79 ascends and descends along the ascent/descent rail 78 by the transfer of a drive force thereto from an ascent/descent motor 79a through a belt 79b. An ascent/descent range is detected by sensors 79c and 79d on an upper portion and a lower portion. Based on detection signals thereof, the ascent/descent motor 79a is driven and controlled. A bottom surface of the ampoule container 79 is formed of the shutter 80 capable of opening and closing. When the ampoule container 79 descends, the shutter 80 is opened, thereby dispensing the held ampoules 10 to the tray 9.

By the ampoule recovery portion 26 having the above-mentioned structure, in a state where the open portion 64 of the ampoule recovery portion 26 is closed by the shutter member 65, the ampoules 10 can be stored in each of the ampoule storage chambers 72 partitioned by the partition member 66. When the ampoules 10 are stored in the first ampoule storage chamber 72, the partition member 66 is rotated, thereby making it possible to feed the ampoules 10 to the next ampoule storage chamber 72. At a time point when the ampoules 10 are stored in the third ampoule storage chamber 72, the first ampoule storage chamber 72 is positioned behind the open portion 64 (the figure shows partially overlapping state).

When the shutter member 65 is rotated to open the open portion 64 to rotate the partition member 66, the ampoule 10 stored in the first ampoule storage chamber 72 can be temporarily held in the ampoule container 79. Here, the ampoule recovery portion 26 is moved to a position above the tray 9 and the ampoule container 79 is allowed to descend, the shutter 80 opens, thereby making it possible to dispense the ampoules 10 to the storage portion of the tray 9. Hereinafter, similarly, in a state where the ampoules 10 are held in the ampoule container 79, the ampoule container 79 is allowed to descend while being positioned above the desired storage portion of the tray, and the dispensing of the ampoules 10 is performed.

### Brief Description of the Drawings

Fig. 1 is a schematic perspective view showing an ampoule dispenser according to this embodiment.
Fig. 2 is a plan view showing a tray transfer portion provided to a bottom surface portion of the ampoule dispenser of Fig. 1.
Fig. 3 is a partial enlarged view showing a second transfer portion of Fig. 2.
Fig. 4 is a side view of Fig. 3.

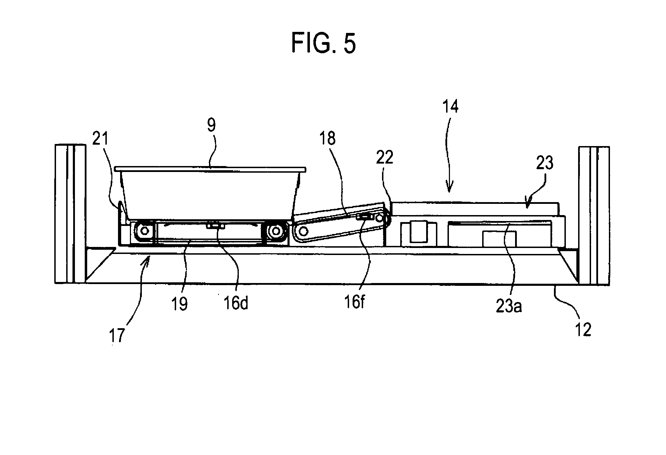

Fig. 5 is a side view viewed from an angle perpendicular to Fig. 4.
Fig. 6 is a side view showing a label feed portion and an injection prescription feed portion of Fig. 1.
Fig. 7 is a front view showing an ampoule feed portion of Fig. 1.
Figs. 8 show a part of a cassette, in which Fig. 8(a) is a partial plan view, Fig. 8(b) is a partial side view showing a state where a pusher unit is advanced, Fig. 8(c) is a side view showing a state where the pusher unit is retreated, and Fig. 8(d) is a front view of the cassette.
Fig. 9 is a side view showing an ampoule recovery portion of Fig. 6.
Figs. 10 are views showing states before and after an ampoule is fed to a tray by the ampoule recovery portion of Fig. 9.
Figs. 11 are explanatory views each showing a mode in which rotation of a partition member is detected in the ampoule recovery portion of Fig. 9.
Figs. 12 are explanatory views showing processes of transferring injection prescription fed from a laser printer of Fig. 6.
Fig. 13 is a flow chart showing an operation of the ampoule dispenser according to this embodiment.
Fig. 14 is a flow chart showing details of operations at stop positions P2, P5, P5, and P7 of processes shown in Fig. 13.
Fig. 15 is a plan view of an ampoule recovery portion according to another embodiment.
Fig. 16 is a front view of Fig. 15.
Fig. 17 is a front view showing an ampoule storage cylinder portion and a shutter member of Fig. 15.
Fig. 18 is a plan view showing a partition member of Fig. 15.

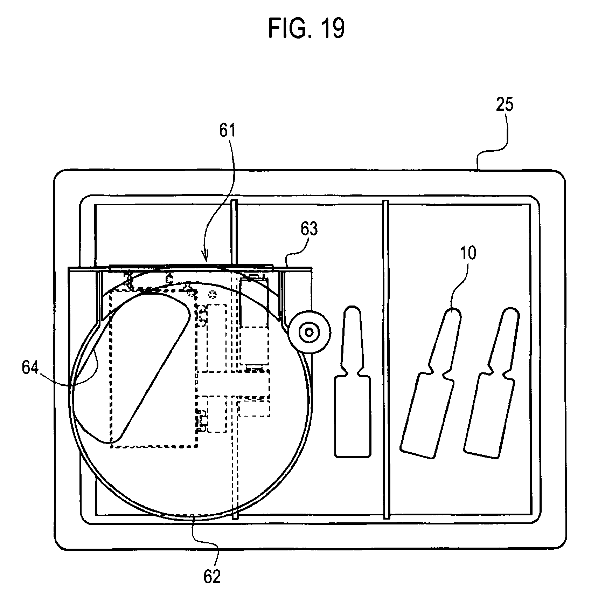

Fig. 19 is a plan view showing an ampoule dispensing state to a tray by the ampoule recovery portion of Fig. 15.

### Description of Symbols

1···device main body, 2···tray feed portion, 3···tray recovery portion, 4···label feed portion, 5···tray transfer portion, 6···ampoule feed portion, 7···injection prescription feed portion, 8···control portion, 9···tray, 10···ampoule (example of medicine), 11···label printer, 12···rectangular frame body, 13···first transfer portion, 14···second transfer portion, 15···third transfer portion, 16···tray detection sensor, 17···fourth conveyor unit, 18···fourth auxiliary conveyor unit, 19···first belt conveyor, 20···guide rail, 21···guide wall, 22···guide piece, 23···fifth belt conveyor (second direction conversion portion), 24A···sixth conveyor unit, 248···seventh conveyor unit, 24C···eighth conveyor unit, 25···cassette, 26···ampoule recovery portion, 27···rotor, 28···front surface door, 29···ampoule storage drum, 30···partition member, 31···ampoule reservoir chamber, 32···partition plate, 33···end plate, 34···rotary motor, 35···detection object portion, 36···drum-type shutter, 37···circular arc plate, 38···arm plate, 39···link, 40···rackgear, 41···open/closemotor, 42···piniongear, 43···ascent/descent sensor, 44···support base, 45···horizontal belt, 46···vertical belt, 47···pusher unit, 48···rod, 49···lock claw portion, 50···position detection sensor, 51···ampoule put-in guide, 52···laser printer, 53···shelf, 54···front panel, 55···feed path, 56···arm member, 57···pivotal transfer portion, 58···fixed transfer portion, 59···guide plate, 60···injection prescription discharge member, 61···stocker, 62···ampoule storage cylinder portion, 63···guide portion, 64···open portion, 65···shutter member, 66···partition member, 67···notch portion, 68···bearing portion, 69···partition plate, 70···positioning sensor, 71···coupling, 72···ampoule storage chamber, 73···pusher, 74···ampoule detection sensor, 75··· rotation position detection sensor, 76··· shutter motor, 77···drivemotor, 78···ascent/descentrail, 79···ampoule container, 80···shutter

## Claims

1. A medicine dispenser, comprising:
a plurality of medicine storage portions in which medicines are stored by type; and
a medicine recovery portion which moves to the medicine storage portions having target medicines based on prescription data, retains and transfers the medicines dispensed from the medicine storage portions, and recovers the medicines at a predetermined position,
wherein:
the medicine recoveryportion comprises a plurality of medicine reservoir chambers; and
the medicines dispensed from the medicine storage portions can be retained in the medicine reservoir chambers in arbitrary-storage patterns.

2. A medicine dispenser according to claim 1, wherein the storage patterns of the medicines which can be retained in each of the medicine-storage chambers are determined based on each of dose periods of the prescription data.

3. A medicine dispenser according to claim 1 or 2, wherein the medicine recovery portion comprises a medicine storage member, which has a cylindrical shape whose outer peripheral surface is formed with an put-in port and a discharge port, a partition member for dividing an inside of the medicine storage member into a plurality of medicine reservoir chambers, and an open and close member for opening and closing the discharge port, the medicine recovery portion allowing the medicines to be put into each of the medicine reservoir chambers through the put-in port, allowing the partition member to rotate, and allowing the discharge port to be opened by the open and close member, to thereby feed the medicines retained in each of the medicine reservoir chambers.
